# EUROPEAN PATENT APPLICATION

(11) **EP 1 908 618 A1**
(43) Date of publication of application: **09.04.2008**
(21) Application number: 07270055.2
(22) Date of filing: 24.09.2007
(51) Int. Cl.: B60K 5/12

(54) **Engine mount**

(30) Priority: 03.10.2006 US 538213
(71) Applicant: Clark Equipment Company, Montvale, NJ 07645 (US)
(72) Inventor: Roehrl, Jonathan, J., Mandan, ND 58554 (US); Wetzel, Michael, D., Bismarck, ND 58504 (US); Osmecki, J. J., Hudson, MA (US)
(74) Representative: Neill, Alastair William

(57) **Abstract**

A mounting arrangement for an internal combustion engine. The mounting arrangement includes first (180) and second (185) engine mounts supporting substantially all weight of the engine, and a third (190) engine mount interconnected to the engine (50) and resisting pivoting of the engine on the first and second engine mounts.

## Description

### BACKGROUND

The present invention relates to an engine mounting system that supports the weight of an engine and isolates engine vibrations.

### SUMMARY

The invention provides a mounting arrangement for an internal combustion engine, the mounting arrangement comprising: first and second engine mounts supporting substantially all weight of the engine, isolating substantially all vertically-directed vibrations of the engine, and defining a pivot line about which the engine may pivot; and a third engine mount interconnected to the engine and resisting pivoting of the engine about the pivot axis, the third engine mount supporting substantially no weight of the engine.

The invention also provides a method for interconnecting an engine to an engine frame, the engine including yaw, roll, and pitch axes having as an origin a center of gravity of the engine, a primary plane containing the yaw and roll axes, the method comprising: (a) supporting substantially all weight of the engine with first and second engine mounts that define a pivot line; (b) isolating the engine frame from substantially all vertically-directed engine vibrations with the first and second engine mounts and not with a third mount; and (c) resisting tipping of the engine about the pivot line with the third mount and not with the first and second engine mounts.

Other aspects of the invention will become apparent by consideration of the detailed description and accompanying drawings.

### BRIEF DESCRIPTION OF THE DRAWINGS

Fig. 1 is a perspective view of an excavator according to one embodiment of the present invention.

Fig. 2 is a side view of the excavator.

Fig. 3 is a perspective view of the engine of the excavator.

Fig. 4a is a cross-sectional view of the engine taken along line 4a-4a in Fig. 3.

Fig. 4b is an enlarged view of one of the engine mounts.

Fig. 5 is an end view of the engine.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways. Also, it is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings. The terms "above" and "below" as used herein when comparing lines and points or parts merely mean at a higher or lower elevation, respectively, and do not require that such lines, points, or parts exist in a common vertical plane; the terms "directly above" and "directly below" are intended to imply that such lines, points, or parts are within a common vertical plane.

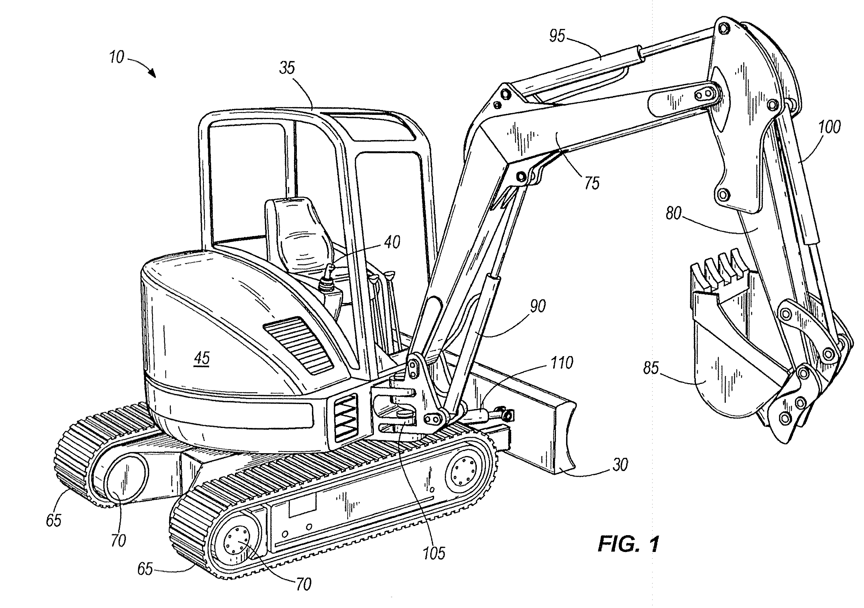

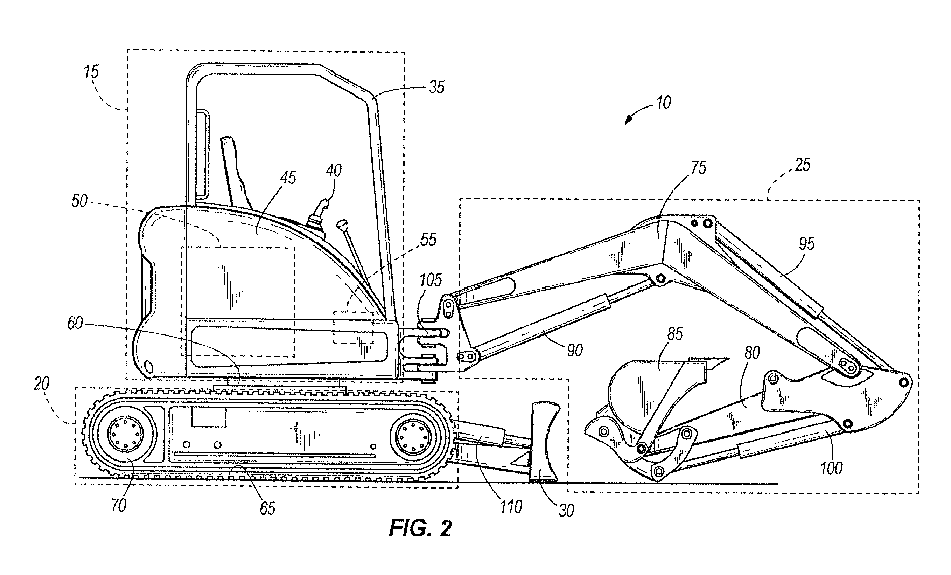

Figs. 1 and 2 illustrate an excavator 10 that includes a house 15, an undercarriage 20, a workgroup 25, and a backfill blade 30. Although the invention is embodied in an excavator in the drawings, it may also be embodied in other vehicles and machines that include internal combustion engine support systems. For example, the engine mounting system of the present invention may be incorporated into a skid steer loader or a compact track loader.

The house structure 15 includes an operator compartment 35 containing an operator control 40, an engine compartment or frame 45 containing an internal combustion engine 50, and a hydraulic pump 55. The hydraulic pump 55 operates in response to operation of the internal combustion engine 50. The house structure 15 is attached to the top of the undercarriage 20 via a swing bearing 60. The house 15 and workgroup 25 are able to rotate or "slew" about a vertical axis on the swing bearing 60 under the influence of a slew motor that operates under the influence of high pressure hydraulic fluid provided by the hydraulic pump 55. The operator control 40 is manipulated by an operator of the excavator 10 to selectively distribute the hydraulic fluid to the slew motor, the undercarriage 20, and/or the workgroup 25.

The undercarriage 20 includes rubber or steel tracks 65, drive sprockets 70, rollers, idlers, and a drive motor. The drive motor rotates the drive sprockets 70 under the influence of high pressure hydraulic fluid provided by the hydraulic pump 55. The tracks 65 rotate under the influence of the drive sprockets 70 and the excavator 10 navigates by rotating the right and left side tracks 65 forward and backward under the influence of the operator control 40.

The workgroup 25 includes a boom 75, a dipper or arm 80, an attachment 85, a boom cylinder 90, a dipper cylinder 95, and an attachment cylinder 100. The illustrated attachment 85 is a bucket, but in other embodiments, the attachment may include an auger, a jackhammer, or other attachments suitable for the worksite. The workgroup 25 is attached to the front of the house structure 15 by way of a swing frame 105 that allows the workgroup 25 to be pivoted left or right to be offset with respect to the longitudinal extent of the undercarriage 20 for worksites that require digging and trenching parallel with the tracks 65. The pump 55 provides pressurized hydraulic fluid to the boom, dipper, and attachment cylinders 90, 95, 100 to pivot the boom 75 with respect to the house 15, the dipper 80 with respect to the boom 75, and the attachment 85 with respect to the dipper 80. The attachment 85 also receives pressurized hydraulic fluid from the pump 55 to actuate a moving part of the attachment with respect to other parts of the attachment 85 (e.g., moving parts of attachments such as augers, saws, rotary brushes, etc.).

A backfill blade cylinder 110 is pivotably interconnected between the backfill blade 30 and the undercarriage 20. The backfill blade cylinder 110 receives pressurized hydraulic fluid from the pump 55 and extends and retracts to raise and lower the backfill blade 30 with respect to the undercarriage 20. The backfill blade 30 is used for grading, leveling, backfilling, trenching, and general dozing work. The backfill blade 30 can be lowered against the ground to lift the rest of the excavator 10 and raise the dump height of the workgroup 25. The backfill blade 30 can also be used to stabilize the excavator 10 during digging operations.

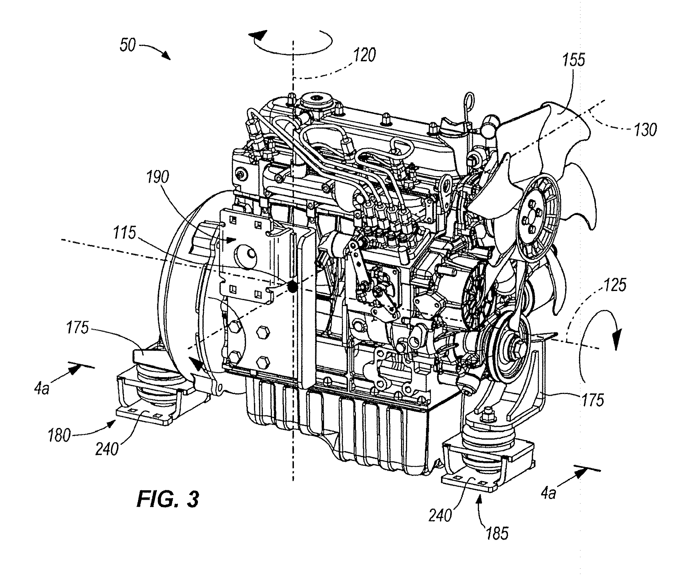

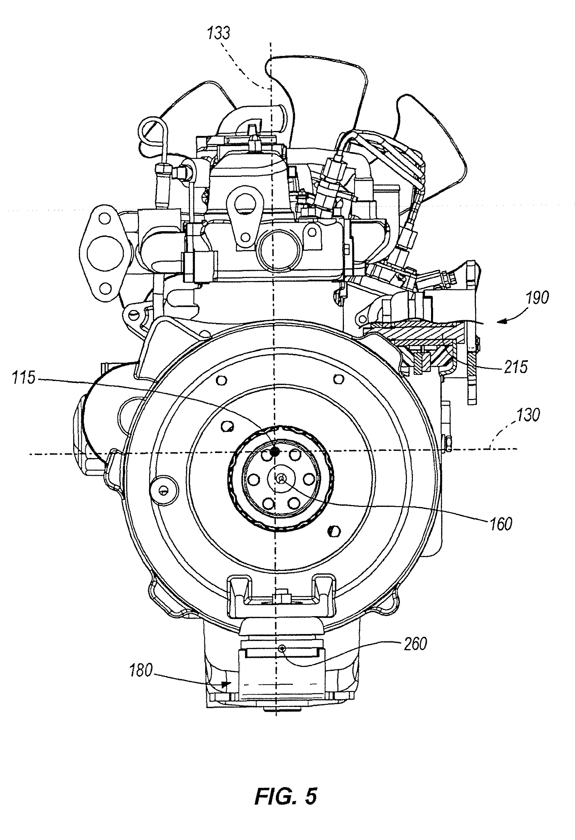

With reference to Figs. 3-5, the engine 50 has a center of gravity 115. Intersecting at the center of gravity 115 are yaw, roll, and pitch axes 120, 125, 130, respectively, such that the center of gravity 115 may be termed the origin of the axes 120, 125, 130. Rotation of the engine about these axes 120, 125, 130 is referred to herein as "yaw," "roll," and "pitch," respectively. The yaw axis 120 is vertical and the roll and pitch axes 125, 130 are horizontal (and therefore perpendicular to the yaw axis 120) and perpendicular to each other. Each axis is perpendicular to a plane containing the other two axes. The plane containing the yaw and roll axes 120, 125 is referred to herein as the "primary plane" (indicated as 133 in Fig. 5). The plane containing the roll and pitch axes 125, 130 (i.e., a horizontal plane that includes the center of gravity 115) is referred to herein as the "secondary plane."

There are many moving parts in the engine 50, including a crankshaft 135, pistons 140, connecting rods 145, cam shafts, valves, belts, a flywheel 150, and a fan 155. A four-cylinder engine creates relatively even up-and-down vertical engine vibrations along the length of the engine, while three-cylinder engines generate uneven vibrations that result in engine pitch and yaw. Three-cylinder engines may be provided with an unbalanced flywheel to translate much of the engine pitch and yaw into relatively even up-and-down vertical engine vibration similar to a four-cylinder engine. Both four- and three-cylinder engines generate roll in response to torque variations that arise when the engine changes speed. The engine mounting system of the present invention therefore primarily concerns itself with isolating vertically-directed vibrations and absorbing engine roll so that it may be used for three- and four-cylinder engines and other engines that include similar vibration and torque characteristics.

The crankshaft 135 has a centerline 160. The crankshaft 135 rotates under the influence of the reciprocating pistons 140 and the connecting rods I45. The pistons l40 reciprocate within cylinders 165. Rotation of the crankshaft 135 is converted into work, such as driving operation of the hydraulic pump 55. The pistons 140 reciprocate in response to combustion of air and fuel within the heads of the cylinders 165. In the illustrated embodiment, the cylinders 165 have generally vertical cylinder axes 170 and each piston 140 reciprocates along the vertical axis 170 of the associated cylinder 165 (i.e., parallel to the primary plane 133). In other embodiments of the engine 50, the cylinder axes 170 may be non-vertical, in which case the inertial forces generated by the reciprocating pistons 140 will include vertical and horizontal components. In such embodiments, rotating counterweights or other measures may be used to offset the horizontal components of inertial forces and vibrations such that the engine mounting structure is presented with only the substantially vertical component of engine vibration and roll forces created by torque variations, as discussed above.

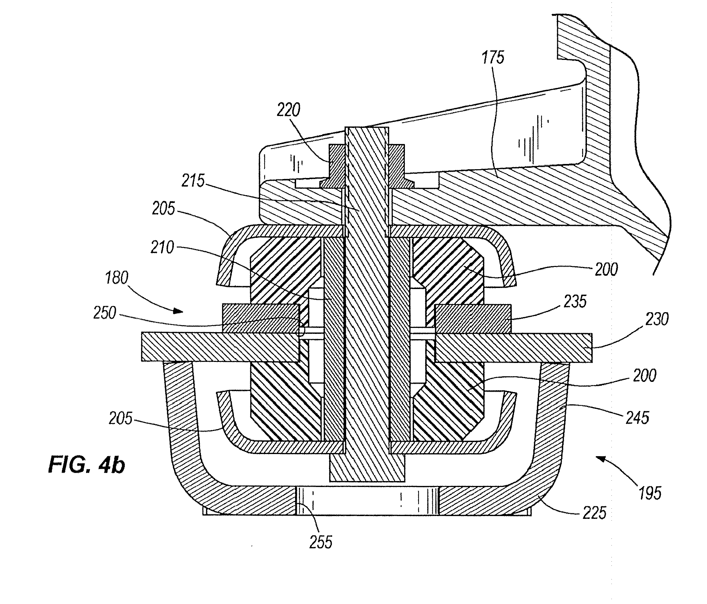

The engine 50 includes mounting flanges 175 to which are attached first, second, and third engine mounts 180, 185, 190, respectively. Fig. 4b illustrates the first engine mount 180, it being understood that the second and third engine mounts 185, 190 are substantially identical to the first engine mount 180. Each engine mount 180, 185, 190 includes a weldment 195, a pair of vibration isolators 200, a pair of cups 205, a tube 210, a bolt 215, and a nut 220.

The weldment 195 includes a base piece 225, a flat top 230, and a ring 235 which are welded together. The base piece 225 includes flanges (Fig. 3) 240 and a U-shaped channel 245. The flanges 240 include mounting holes for mounting the weldment 195 to the engine frame 45. The flat top 230 extends across the U-shaped channel 245. The flat top 230 and ring 235 define aligned central holes, and the holes combine to form a central bore 250, which has a desired bore length. In other embodiments, the flat top 230 may be made thick enough to provide a bore of the desired bore length, which would eliminate the need for the ring 235 but would include more material in the flat top 230 and possibly increase cost. The base piece 225 includes a hole 255 that is aligned with the central bore 250 to facilitate access to the bolt 215.

The vibration isolators 200 sit above the ring 235 and below the flat top 230. Each vibration isolator 200 includes a step that permits a portion of each vibration isolator 200 extend into the central bore 250. The desired length of the central bore 250 is set to leave a gap between the vibration isolators 200 in the central bore 250. The vibration isolators 200 themselves include central holes that align with the central bore 250. One example of a suitable commercially-available resilient vibration isolator is Part No. 103754 from Barry Controls of Burbank, California. The vibration isolators 200 may be constructed of rubber or another resilient material.

The vibration isolators 200 include generally planar surfaces that abut against the cups 205, and the orientation of the engine mounts 180, 185, 190 is with reference to these planar surfaces. Under this convention, the first and second engine mounts 180, 185 of the illustrated embodiment are said to be "perpendicular" to the primary plane 133, and the third engine mount 190 is said to be "parallel" to the primary plane 133, because those are the orientations of the planar surfaces of the vibration isolators within the engine mounts 180, 185, 190. The first and second engine mounts 180, 185 may be said to be "coplanar" in the illustrated embodiment because the planar surfaces of the vibration isolators in those engine mounts are coplanar. In other embodiments, the first and second engine mounts 180, 185 may be parallel but not coplanar if one mount is higher than the other.

The cups 205 sit above and below the vibration isolators 200, and extend toward each other partially around the vibration isolators 200. The cups 205 may be stamped from sheet metal, for example. Each cup 205 includes a central hole that aligns with the central holes of the vibration isolators 200 and the central bore 250 of the weldment 195. The tube 210 extends between and abuts against the inwardly-facing surfaces of the cups 205. The bolt 215 extends up through the tube 210, such that the head of the bolt 215 abuts against the lower cup 205. The weldment 195 surrounds the head of the illustrated bolt 215 to shield the head from impact that may damage it, but in other embodiments the bolt 215 may be inverted such that the head is against the mounting flange 175. The nut 220 is threaded onto the opposite end of the bolt 215 against the mounting flange 175 of the engine 50. The nut 220 is tightened until the cups 205 are snug against the tube 210.

The tube 210 provides structural rigidity within the engine mount 180, 185, 190. The length of the tube 210 is selected such that the vibration isolators are snugly captured between the cups 205, and may be selected such that the vibration isolators are slightly compressed between the cups 205 to ensure the snug assembly. With the illustrated arrangement of engine mounts 180, 185, 190, engine vibrations must pass through the vibration isolators 200 prior to reaching the engine frame 45. Vertically-directed vibrations of the type the engine 50 generates are absorbed within the vibration isolators 200 as the isolators 200 are alternatingly placed into compression against the flat top 230 and ring 235 of the weldment 195.

For ideal vibration isolation, the first engine mount 180, second engine mount 185, and crankshaft centerline 160 are all within the primary plane 133, and the first and second engine mounts 180, 185 are equidistant from the center of gravity 115. However, in practice, the crankshaft centerline 160 of an engine is often outside of the primary plane 133 and space constraints dictate unequal spacing af the first and second engine mounts 180, 185 from the center of gravity 115.

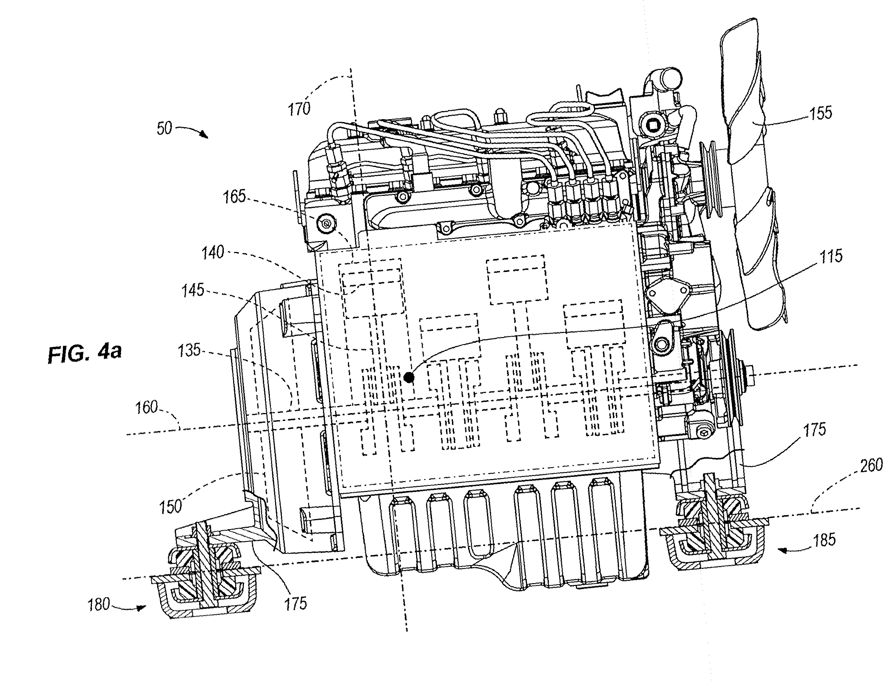

For example, the illustrated crankshaft centerline 160 is about two inches below and one-third inch right of the center of gravity 115 (as viewed from the flywheel end in Fig. 5) and the second engine mount 185 is closer to the center of gravity 115 than the first engine mount 180 (as seen in Fig. 4a). The engine mounts 180, 185, 190 may be positioned in non-ideal locations to accommodate such practical design considerations as: commonality between different engine installations; simplifications and cost-reduction in manufacturing; enabling use of common parts; compact design; and tolerance stack-up. While ideal vibration isolation is desirable, sacrificing some vibration isolation in light of such considerations may be acceptable in practice.

In the illustrated embodiment, the points at which the engine 50 connects to the first and second engine mounts 180, 185 define a pivot line 260 that is directly below the crankshaft centerline 160 (i.e., pivot line 260 and crankshaft centerline 160 are parallel to each other and occupy a common vertical plane). The pivot line 260 extends through the center of the first and second engine mounts 180, 185, between the flat top 230 and ring 235.

The crankshaft centerline 160 and pivot line 260 are also illustrated as being generally parallel to the roll axis 125, but not in the primary plane 133 (i.e., the vertical plane defined by the centerline 160 and pivot line 260 is parallel to but non-coplanar with the primary plane 133 in the illustrated embodiment). In reality, the crankshaft centerline 160 is angled at a non-zero Euler angle with respect to the roll axis 125. Depending on the engine design, the Euler angle may be very small (e.g., 1° or less), relatively large (e.g., on the order of 30°-40°), or anywhere in between. As the centerline 160 gets closer to being parallel and directly below the roll axis 125, the vibration isolation of the first and second mounts 180, 185 becomes more effective. In other embodiments, the pivot line 260 may be made parallel to the roll axis 125. In such embodiments, the centerline 160 and pivot line 260 will be misaligned by the Euler angle described above, and would therefore not be coplanar with each other.

The first and second engine mounts 180, 185 support substantially all weight of the engine 50, and are exposed to the vertical component of engine vibrations. The vertical component of engine vibration alternatingly applies compressive forces on the top and bottom vibration isolators 200 of the first and second engine mounts 180, 185. The first and second engine mounts 180, 185 provide substantially no resistance to the engine tipping or pivoting about the pivot line 260.

Engine speed changes create variations in torque in the crankshaft 135. One component of such torque variations is engine roll, which causes the engine 50 to tip or pivot about the pivot line 260. In the illustrated embodiment, the third engine mount 190 is alone responsible for resisting pivoting of the engine 50 about the pivot line 260, and is consequently responsible for absorbing engine roll. The third engine mount 190 supports substantially no weight of the engine 50. In other embodiments, additional roll-resisting engine mounts may be employed to assist the third engine mount 190 in resisting engine tipping or pivoting about the pivot line 260.

Experimental test results indicate, for the engine 50 of the illustrated embodiment, that raising the connection point of the third engine mount 190 above the center of gravity 115 about two to four inches best isolates horizontal vibrations resulting from engine roll forces, and best resists resultant engine tipping about the pivot line 260. In other words, the third engine mount 190 is above the secondary plane. In other embodiments, the connection point of the third engine mount 190 may be moved up or down to best isolate such horizontal vibrations and resist engine tipping. The position of the third engine mount 190 with respect to the length of the engine 50 (i.e., movement parallel to the roll axis 125) does not have substantial bearing on the efficacy of the third mount 190 to isolate horizontal vibrations and resist engine tipping. The vibration isolators 200 of the third engine mount 190 are preferably positioned parallel to the primary plane 133, with the bolt 215 extending perpendicular to the primary plane 133.

Various features and advantages of the invention are set forth in the following claims.
Attention is directed to all papers and documents which are filed concurrently with or previous to this specification in connection with this application and which are open to public inspection with this specification, and the contents of all such papers and documents are incorporated herein by reference.
All of the features disclosed in this specification (including any accompanying claims, abstract and drawings), and/or all of the steps of any method or process so disclosed, may be combined in any combination, except combinations where at least some of such features and/or steps are mutually exclusive.
Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.
The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A mounting arrangement for an internal combustion engine, the mounting arrangement comprising:
first and second engine mounts supporting substantially all weight of the engine, isolating substantially all vertically-directed vibrations of the engine, and defining a pivot line about which the engine may pivot; and
a third engine mount interconnected to the engine and resisting pivoting of the engine about the pivot axis, the third engine mount supporting substantially no weight of the engine.

2. The mounting arrangement of claim 1, wherein the engine has yaw, roll, and pitch axes having as an origin a center of gravity of the engine, a primary plane containing the yaw and roll axes; and wherein the pivot line is non-parallel to the primary plane.

3. The mounting arrangement of claim 2, wherein the third engine mount is connected to the engine at a point outside of the primary plane.

4. The mounting arrangement of claim 1, wherein the engine includes a crankshaft having a crankshaft centerline that is angled at a non-zero angle with respect to a roll axis of the engine.

5. The mounting arrangement of claim 1, wherein the engine includes a crankshaft having a crankshaft centerline that is parallel to the pivot line; and wherein the crankshaft centerline and pivot line are within a common vertical plane.

6. The mounting arrangement of claim 1, wherein each of the first, second, and third engine mounts includes first and second vibration isolators constructed of elastomeric material, the first and second vibration isolators of each mount being alternatingly placed in compression under the influence of vibrations in the engine.

7. The mounting arrangement of claim 1, wherein the engine has yaw, roll, and pitch axes having as an origin a center of gravity of the engine, a primary plane containing the yaw and roll axes; and wherein the first and second engine mounts are perpendicular to the primary plane and the third engine mount is parallel to the primary plane.

8. The mounting arrangement of claim 1, wherein the first and second engine mounts are coplanar with each other.

9. A work vehicle comprising:
a frame;
a boom arm movably mounted to the frame;
an attachment movably mounted to the boom arm;
an internal combustion engine including first, second, and third axes having as an origin a center of gravity of the engine, a primary plane containing the first and second axes;
at least one hydraulic pump operating in response to operation of the internal combustion engine to provide a flow of pressurized hydraulic fluid;
an operator control actuable to direct the flow of pressurized hydraulic fluid to operate the boom arm and attachment; and
first, second, and third engine mounts mounted to the frame;
wherein the first and second engine mounts support the engine at respective first and second mounting points that define a pivot line;
wherein the first and second engine mounts support substantially all engine weight, isolate the frame from components of engine vibration directed generally parallel to the primary plane, and do not resisting tipping of the engine about the pivot line; and
wherein the third engine mount resists tipping of the engine about the pivot line, and supports substantially no engine weight.

10. The work vehicle of claim 9, wherein the pivot line is non-parallel to the primary plane.

11. The work vehicle of claim 9, wherein the third engine mount is connected to the engine at a point outside of the primary plane.

12. The work vehicle of claim 9, wherein the engine includes a crankshaft having a centerline that is angled at a non-zero angle with respect to the second axis of the engine.

13. The work vehicle of claim 9, wherein the engine includes a crankshaft having a crankshaft centerline that is parallel to the pivot line; and wherein the crankshaft centerline and pivot line are within a common vertical plane.

14. The work vehicle of claim 9, wherein each of the first, second, and third engine mounts includes first and second vibration isolators constructed of elastomeric material, the first and second vibration isolators of each mount being alternatingly placed in compression under the influence of vibrations in the engine.

15. The work vehicle of claim 9, wherein the first and second engine mounts are perpendicular to the primary plane and the third engine mount is parallel to the primary plane.

16. The work vehicle of claim 9, wherein the first and second engine mounts are coplanar with each other.

17. A method for interconnecting an engine to an engine frame, the engine including yaw, roll, and pitch axes having as an origin a center of gravity of the engine, a primary plane containing the yaw and roll axes, the method comprising:
(a) supporting substantially all weight of the engine with first and second engine mounts;
(b) defining a pivot line with the first and second engine mounts;
(c) isolating the engine frame from substantially all vertically-directed engine vibrations with the first and second engine mounts and not with a third mount; and
(d) resisting tipping of the engine about the pivot line with the third mount and not with the first and second engine mounts.

18. The method of claim 17, wherein step (a) includes positioning the first and second engine mounts perpendicular to the primary plane.

19. The method of claim 17, wherein step (b) includes defining the pivot line in a non-parallel relationship with respect to the primary plane.

20. The method of claim 17, wherein the engine includes a crankshaft having a crankshaft centerline, and wherein step (b) includes positioning the pivot line and crankshaft centerline parallel to each other in a common vertical plane.

21. The method of claim 17, wherein step (c) includes providing first and second elastomeric members within each of the first and second engine mounts and absorbing substantially all vertically-directed engine vibrations with alternating compression of the first and second elastomeric members.

22. The method of claim 17, wherein step (d) includes positioning the third engine mount parallel to the primary plane.

23. The method of claim 17, wherein step (d) includes positioning the third engine mount outside of the primary plane and above the center of gravity.
